(19) Europäisches Patentamt

European Patent Office

Office européen des brevets

(11) **EP 4 506 710 A1**

(12) **EUROPEAN PATENT APPLICATION**

(43) Date of publication:
**12.02.2025 Bulletin 2025/07**

(21) Application number: **23190799.9**

(22) Date of filing: **10.08.2023**

(51) International Patent Classification (IPC):
**G01S 5/00** (2006.01)    **G01S 5/02** (2010.01)
**G01S 5/12** (2006.01)

(52) Cooperative Patent Classification (CPC):
**G01S 5/12; G01S 5/0072; G01S 5/011;
G01S 5/0218; G01S 5/0284;** G01S 5/0244

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Robert Bosch GmbH
70442 Stuttgart (DE)**

(72) Inventors:
• **Hassan, Khaled Shawky
31157 Sarstedt (DE)**
• **Jornod, Guillaume
10243 Berlin (DE)**
• **Stark, Maximilian
20249 Hamburg (DE)**

(54) **A METHOD FOR A DEVICE FOR INDICATING A NLOS CONDITION**

(57) The invention relates to a method (100) for a device (10) for indicating a non-line-of-sight (NLOS) condition, comprising the following steps:
- Providing (101) a ranging information, an angle of arrival, and an assisting orientation information of an antenna system of the device (10) based on a measurement,
- Receiving (102) a further ranging information, angle of arrival and assisting orientation information from another device (20) and a certainty factor, wherein the certainty factor specifies a certainty of a line-of-sight (LOS) condition depending on the measurement,
- Verifying (103) the combination of the provided and received information based on an analysis of a model, wherein the model comprises a set of rules for indicating a non-line-of-sight (NLOS) condition,
- Determining (104) a value of a line-of-sight (LOS) indicator depending on the result of the verifying (103) to indicate a non-line-of-sight (NLOS) condition.

## Fig. 1

## Description

The invention relates to a method for a device for indicating a non-line-of-sight condition. Furthermore, the invention relates to a device, and a positioning system for this purpose.

State of the art

Various techniques for wireless positioning are well-known. However, in scenarios such as urban areas with tall buildings and obstacles, achieving a clear line of sight between devices may not always be possible. In such cases, signals can encounter obstructions, walls, or other reflecting surfaces, leading to signal reflections, diffractions, and scattering. These signal interactions can create multiple signal paths, making it challenging to accurately estimate distances, angles, or positions between the transmitter and receiver. Further, resolvability of the paths is important for performing positioning. In general, a higher bandwidth can help to resolve an individual path. However, higher frequencies result in a higher pathloss. Thus, signal paths can take multiple bounces before arriving at the receiver and can be too weak to be detected. Hence, so-called FR2 positioning usually has less paths to resolve at the expense of a limited communication range. In general, there are line-of-sight (LOS) paths and non-line-of-sight (NLOS) paths. The LOS path is defined as the direct path between transmitter and receiver. Usually, only one LOS path is existing, which should be used for ranging. However, multiple NLOS paths can exist due to signal reflection or scattering.

A strong NLOS path can also be used for ranging. Disadvantageously, without knowledge of the trajectory of the NLOS path performing a positioning procedure and for example considering the NLOS path to determine the relative distance will result in an erroneous position estimate. This means that NLOS conditions can lead to errors in estimating the location of a device due to the uncertainties introduced by signal reflections and multipath effects. Therefore, the possible NLOS condition remains challenging in various wireless applications, and further research is necessary.

Disclosure of the invention

It is therefore an object of the present invention to at least partially overcome the disadvantages described above. In particular, it is an object of the present invention, to provide a method to enhance the performance and reliability of systems operating under line-of-sight and non-line-of-sight conditions.

The above object is solved by a method with the features of claim 1, a device with the features of claim 8, and a positioning system with the features of claim 10, further by a respective computer program and a computer-readable medium. Further features and details of the invention are disclosed in the respective dependent claims, the description, and the drawings. Features and details described in connection with the inventive method also apply to the inventive user equipment as well as the inventive Reduced capability user equipment, and vice versa in each case, so that with respect to the disclosure concerning the individual aspects of the invention reference can always be made mutually.

The object is particularly solved by a method for a device for indicating a non-line-of-sight (NLOS) condition. The method comprises the following steps:

- Providing a ranging information, an angle of arrival, and an assisting orientation information of an antenna system of the device based on a measurement,
- Receiving a further ranging information, angle of arrival and assisting orientation information from another device and a certainty factor, wherein the certainty factor specifies a certainty of a line-of-sight condition depending on the measurement,
- Verifying the combination of the provided and received information based on an analysis of a model, wherein the model comprises a set of rules for indicating a non-line-of-sight (NLOS) condition,
- Determining a value of a line-of-sight (LOS) indicator depending on the result of the verifying to indicate a non-line-of-sight (NLOS) condition.

This allows to significantly enhance the performance of a positioning procedure considering under line-of-sight and non-line-of-sight conditions. Further, this has the advantage for a device to be able to achieve better and more accurate results regarding positioning. Furthermore, this allows to obtain more reliable results in determining a precise position. Ranging measurements during a positioning procedure for obtaining ranging information can be understood as a process of estimating distances between at least two entities such as for example a reference point, a user equipment, a user device, or a vehicle. Such a measurement is performed for determining a position of the device relative to the given reference points. The number of reference points used for ranging can impact the accuracy of the position estimation. Triangulation or multilateration techniques become more accurate with an increased number of reference points. A non-line-of-sight (NLOS) scenario can be defined as a situation in which there is an obstruction or obstacle between a transmitter and a receiver of a signal, preventing a direct line of sight between them. In wireless communication or positioning systems, a direct line of sight is advantageous because it allows signals to travel unhindered in a straight line from the transmitter to the receiver, resulting in more reliable and accurate communication or positioning. In a line-of-sight (LOS) scenario, the signal can travel directly from a transmitting device to a receiving device without encountering significant obstacles, resulting in a more straightforward and predictable Angle of Arrival (AoA) measurement. A LOS indicator can be determined based on measurements or calculations related to the received signal strength, signal-to-noise ratio, time-of-flight, or angle of arrival. It is possible, that the assisting orientation information comprises either an exact orientation based on coordinates, in particular x, y, z coordinates, and/or further assisting information to determine the device orientation in space.

It is possible that the method comprises the following further step:

- Transmitting the determined value of a line-of-sight (LOS) indicator to the other device, wherein the other device comprises a central entity such as a location management function of the communications network.

It is further possible that the method comprises the further following step:

- Transmitting the determined value of a line-of-sight (LOS) indicator to the other device based on a request from the other device.

This allows to improve the performance of a positioning procedure for surrounding entities such as for example further devoices or vehicles. A communications network can be understood as network of interconnected devices, systems, or entities that are linked together to facilitate the exchange of signals or of information such as data. It serves as a framework for communication and data sharing between nodes within the network, enabling seamless connectivity and collaboration. Networks can take various forms, such as a cellular network, a local area network (LAN) or the global internet connecting entities or devices worldwide. The underlying infrastructure may include physical and/or virtual and/or software components like nodes, cables, routers, switches, and/or wireless access points.

It is a possibility that the method comprises at least one of the following further steps:

- Determining a ranging information based on the measurement by the device,
- Measuring an orientation of the antenna system of the device.

This has the advantage that the accuracy and certainty of the ranging information during a positioning procedure can advantageously be increased. The type of measurement or the measurement method can influence the certainty of the ranging information. Different measurement methods, such as Time of Flight (ToF) or Angle of Arrival (AoA), have varying levels of precision. For example, Time-of-Flight-based measurements can be more accurate than measurements based on signal strength (Received Signal Strength Indicator (RSSI).

It is conceivable that during the verifying step the method comprises the following further step:

- Checking if the requirements regarding the results of the set of rules are violated, and in case of a positive result initiate the determining step.

It is further possible that during the verifying step the method comprises the following further steps:

- Checking the coherence of the set of rules for indicating a line-of-sight condition, wherein the set of rules specifies the consistency between the assisting orientation information of the antenna system, the heading of the entities (10, 20), the angles of arrivals and the ranging information measured by the entities (10, 20), and
- Initiating the determining step based on the result of the checking.

This allows to advantageously interpret the line-of-sight scenario in an efficient and faster way. Further, using an analysis model based on the set of rules allows a significantly simpler interpretation of the line-of-sight scenario.

Another aspect of the invention is a device for indicating a NLOS condition for a communications network, comprising means for carrying out the steps of the inventive method. It is possible that the device comprises a device, a user equipment, a vehicle, or a management function of a communications network. Thus, the device according to the invention can have the same advantages as have been described in detail with reference to a method according to the invention.

Another aspect of the invention is a positioning system for indicating a NLOS condition comprising at least one device, wherein the positioning system is configured to carry out the steps of the inventive method. Thus, the positioning system according to the invention can have the same advantages as have been described in detail with reference to a method according to the invention.

According to a further aspect, there is provided a computer program comprising instructions to cause the inventive device, or its respective embodiments, and/or the inventive positioning system, or its respective embodiments, to execute the steps of the inventive method, or its respective embodiments.

According to a further aspect, there is provided a computer-readable medium having stored thereon the above-mentioned computer program.

Furthermore, the method according to the invention may be implemented as a computer-implemented method.

Further advantages, features and details of the invention will be apparent from the following description, in which embodiments of the invention are described in detail with reference to the drawings. In this context, the features mentioned in the claims and in the description may each be essential to the invention individually or in any combination. Showing:

Fig. 1:     A method according to embodiments of the invention,

Fig. 2     A schematic diagram according to embodiments of the invention

Fig. 3:     A further schematic diagram according to embodiments of the invention

Fig. 4     A further schematic diagram according to embodiments of the invention

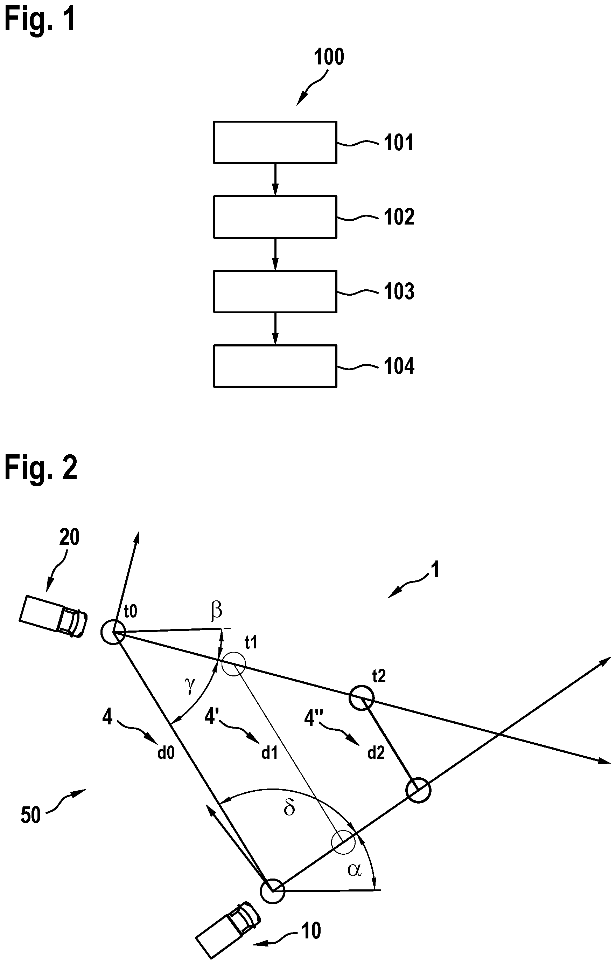

Fig. 1 shows a method 100 according to embodiments of the invention. Fig. 1 illustrates a method 100 for a device for indicating a NLOS condition. The method 100 comprises the following steps, performed at the device 10: At step 101 a ranging information and an assisting orientation information of an antenna system of the device 10, wherein the assisting orientation information comprises either the exact orientation in, e.g., x, y, z coordinates, and/or further assisting information to determine the device orientation in space, are provided based on a measurement. In step 102, a further assisting orientation information from another device (20) and a certainty factor is received. The certainty factor specifies a certainty of a line-of-sight condition depending on the measurement. Then, in step 103, the combination of the in step 101 provided and in step 102 received information is verified based on an analysis of a model. The model comprises a set of rules for indicating a non-line-of-sight (NLOS) condition. In step 104, a value of a line-of-sight (LOS) indicator for indicating the NLOS condition is determined depending on the result of the verifying.

Fig. 2 illustrates an exemplary situation that two vehicles 10, 20 are approaching each other. A ranging is performed at time points t0, t1 and t2. Fig. 2. shows a line-of-sight (LOS) scenario between the two vehicles 10, 20. Therefore, the strongest path will be the LOS path and performing for example a measurement based on the Time of Flight (ToF) measurement method for this path will result in calculating a correct relative distance d0 between the two vehicles 10, 20. As depicted in Fig. 2 the information of the Angle of Arrival of the possible line-of-sight path is used. Thus, knowing the orientations $\alpha, \beta$ and the respective angle-of-arrivals $\gamma, \delta$ sum up to 180° degrees. Otherwise, the two vehicles 10, 20 would not be connected by a straight line, which represents the LOS path. In the embodiment in Fig. 2 the ranging is performed by both vehicles 10, 20. Thus, the angles are always considered as angle-of-arrival instead of angle of departure based on either transmitting or receiving. As a result, the range d0 can be indicated to be either LOS or NLOS path. It is also possible to consider a 3D orientation between the vehicles 10, 20.

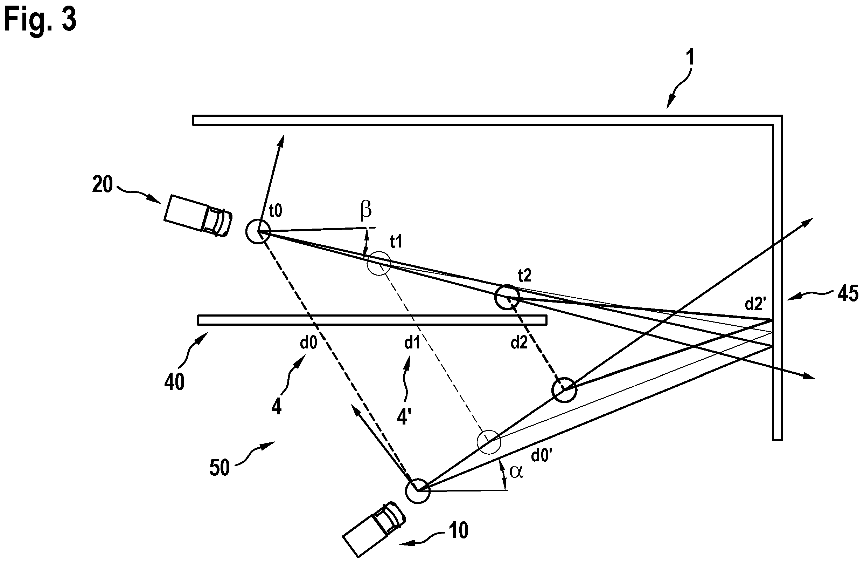

Fig. 3 illustrates the situation that two vehicles 10, 20 are approaching each other. Further, Fig. 2 depicts a non-line-of-sight (NLOS) scenario between the two vehicle 10, 20, because of a LOS blockage 40 as depicted in Fig. 2. Further, Fig. 2 shows a reflector 45, which can reflect the signals of the vehicles 10, 20. In this situation it is very probable that range measurements are performed at time points t0, t1 and t2. Further, an Angle of Arrival (AoA) is not available. Nevertheless, ranging measurements d0, d1 and d2 are collected at the time points t0, t1 and t2. As shown in Figure 3, the two vehicles are moving on individual lines with known slope due to the orientation.

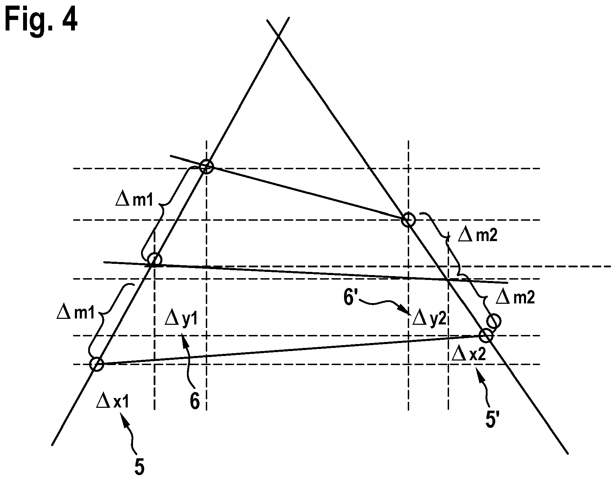

In Fig. 2 and Fig. 3 it can be assumed that in addition to the orientation, also the speed information is known. The first vehicle 10 is assumed to move distance $\Delta m1$ and the second vehicle 20 is assumed to move distance $\Delta m2$ as shown in Fig. 4.

Fig. 4 illustrates the geometrical relations in case the two vehicles 10, 20 are approaching each other. Regarding the orientation and of each vehicle 10, 20 the following equations can be applied:

$$\Delta x1 = \cos \alpha * \Delta m1$$

$$\Delta x2 = \cos \beta * \Delta m2$$

$$\Delta y1 = \sin \alpha * \Delta m1$$

$$\Delta y2 = \sin \beta * \Delta m2$$

In turn the difference between $d_0^2$ 4 and $d_k^2$ 4' as shown in Fig. 2 and Fig. 3, for example at time $k$ is given as

$$d_0{}^2 - d_k{}^2 = -2k \cdot (\Delta x \cdot c1 + \Delta y \cdot c2) + k2 \cdot (c12 + c22)$$

with

$$c1 = (\Delta x1 + \Delta x2) \text{ and } c2 = (\Delta y1 - \Delta y2)$$

$\Delta$ x 5, 5' and $\Delta$y 6, 6' can be unknown in the beginning but will be found for a sufficient number of measurements.

Therefore, the above set of rules represents a geometrical relationship between the orientation, speed, and distance, which can be used for an indication of a line-of-sight condition and/or non-line-of-sight (NLOS) condition. For example, a trigonometric analysis can be used for the analysis of the set of rules. This means, that in case the set of rules above is violated, it can be assumed that probably a NLOS condition may exist. Therefore, these equations may support as model for indicating a NLOS condition. This model is a deterministic model based on the assumption that no measurement noise. In case of noisy measurements, a Bayesian approach can be applied to derive a LOS-probability instead.

The above explanation of the embodiments describes the present invention in the context of examples. Of course, individual features of the embodiments can be freely combined with each other, provided that this is technically reasonable, without leaving the scope of the present invention.

**Claims**

1.   A method (100) for a device (10) for indicating a non-line-of-sight (NLOS) condition, comprising the following steps:

- Providing (101) a ranging information, an angle of arrival, and an assisting orientation information of an antenna system of the device (10) based on a measurement,
- Receiving (102) a further ranging information, angle of arrival and assisting orientation information from another device (20) and a certainty factor, wherein the certainty factor specifies a certainty of a line-of-sight (LOS) condition depending on the measurement,
- Verifying (103) the combination of the provided and received information based on an analysis of a model, wherein the model comprises a set of rules for indicating a non-line-of-sight (N LOS) condition,
- Determining (104) a value of a line-of-sight (LOS) indicator depending on the result of the verifying (103) to indicate a non-line of sight (NLOS) condition.

2.   The method (100) of claim 1, **characterized in that** the method (100) comprises the following further step:

- Transmitting the determined value of the line-of-sight (LOS) indicator to the other device (20), wherein the other device comprises a central entity such as a location management function of a communications network (1).

3.   The method (100) of claim 1 or 2, **characterized in that** the method (100) comprises the further following step:

- Transmitting the determined value of the line-of-sight (LOS) indicator to the other device (20) based on a request from the other device (20).

4.   The method (100) of any one of the preceding claims, **characterized in that** the method (100) comprises at least one of the following further steps:

- Determining a ranging information based on the measurement by the device (10),
- Measuring an orientation of the antenna system of the device (10).

5.   The method (100) of any one of the preceding claims, **characterized in that** during the verifying (103) step the method comprises the following further step:

- Checking if the requirements regarding the set of rules are violated, and in case of a positive result initiate the determining step (104).

6.   The method (100) of any one of the preceding claims, **characterized in that** during the verifying (103) step the method (100) comprises the following further steps:

- Checking the coherence of the set of rules for indicating a line-of-sight (LOS) condition, wherein the set of rules specifies the consistency between the assisting orientation information of the antenna system, the heading of the entities (10, 20), the angles of arrivals and the ranging information measured by the entities (10, 20), and
- Initiating the determining (104) step based on the result of the checking.

7. The method (100) of any one of the preceding claims, **characterized in that** that the assisting orientation information comprises either an exact orientation based on coordinates, in particular x, y, z coordinates, and/or further assisting information to determine the device orientation in space.

8. A device (10) for indicating a non-line-of-sight (NLOS) condition for a communications network, comprising means for carrying out the steps of the method (100) of any one of the preceding claims.

9. The device (10) of claim 8, **characterized in that** the device (10) comprises a terminal device, a user equipment, a vehicle, or a management function of the communications network (1).

10. A positioning system (50) for indicating a non-line-of-sight (NLOS) condition comprising at least one device (10, 20), wherein the positioning system (50) is configured to carry out the steps of the method (100) of any one of the claims 1 to 7.

11. A computer program comprising instructions to cause the device (10) according to claim 8 or 9 and/or the positioning system (50) according to claim 10 to execute the steps of the method (100) according to one of claims 1 to 7.

12. A computer-readable medium having stored thereon the computer program of claim 11.

# Fig. 1

# Fig. 2

Fig. 3

# Fig. 4

**EUROPEAN SEARCH REPORT**

Application Number

EP 23 19 0799

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/099989 A1 (HANDTE THOMAS [DE] ET AL) 1 April 2021 (2021-04-01) * paragraphs [0005], [0083], [0084], [0106] * | 1-12 | INV. G01S5/00 G01S5/02 G01S5/12 |
| A | EP 3 793 277 A1 (ZTE CORP [CN]) 17 March 2021 (2021-03-17) | 1-12 | |
| A | WO 2021/253018 A2 (FUTUREWEI TECHNOLOGIES INC [US]) 16 December 2021 (2021-12-16) * abstract * | 1-12 | |

TECHNICAL FIELDS SEARCHED (IPC)

G01S

The present search report has been drawn up for all claims

| Place of search | Date of completion of the search | Examiner |
|---|---|---|
| Munich | 29 January 2024 | Chindamo, Gregorio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 0799

This annex lists the patent family members relating to the patent documents cited in the above-mentioned European search report.
The members are as contained in the European Patent Office EDP file on
The European Patent Office is in no way liable for these particulars which are merely given for the purpose of information.

29-01-2024

| Patent document cited in search report | | | Publication date | Patent family member(s) | | | Publication date |
|---|---|---|---|---|---|---|---|
| US 2021099989 | A1 | | 01-04-2021 | BR | 112019004397 | A2 | 28-05-2019 |
| | | | | CN | 109792278 | A | 21-05-2019 |
| | | | | EP | 3510706 | A1 | 17-07-2019 |
| | | | | US | 2019200339 | A1 | 27-06-2019 |
| | | | | US | 2021099989 | A1 | 01-04-2021 |
| | | | | WO | 2018046271 | A1 | 15-03-2018 |
| EP 3793277 | A1 | | 17-03-2021 | CN | 111417188 | A | 14-07-2020 |
| | | | | EP | 3793277 | A1 | 17-03-2021 |
| | | | | HU | E060936 | T2 | 28-04-2023 |
| | | | | US | 2021270932 | A1 | 02-09-2021 |
| | | | | WO | 2020140443 | A1 | 09-07-2020 |
| WO 2021253018 | A2 | | 16-12-2021 | CN | 116458096 | A | 18-07-2023 |
| | | | | EP | 4193498 | A2 | 14-06-2023 |
| | | | | US | 2023288517 | A1 | 14-09-2023 |
| | | | | WO | 2021253018 | A2 | 16-12-2021 |

EPO FORM P0459

For more details about this annex : see Official Journal of the European Patent Office, No. 12/82